# EUROPEAN PATENT APPLICATION

(11) **EP 1 619 663 A1**
(43) Date of publication of application: **25.01.2006**
(21) Application number: 05254308.9
(22) Date of filing: 08.07.2005
(51) Int. Cl.: G10L 15/28, G10L 15/26, H04M 3/493

(54) **Speech enabled computing system**

(30) Priority: 13.07.2004 US 889760
(71) Applicant: Hewlett-Packard Development Company, L.P., Houston, Texas 77070 (US)
(72) Inventor: Vennelakanti, Ravigopal, Banglaore Karnataka 560047 (IN); Agarwal, Tushar, Bangalore Karnataka 560020 (IN)
(74) Representative: Powell, Stephen David

(57) **Abstract**

A technique to link an audio enabled device with a speech driven application is accomplished by using voice framework [110] that receives and transmits digitized speech audio without specifying the specific ones of the audio enabled device-independent and speech application platform-independent parameters. The voice framework [110] then converts the received digital speech audio to computer readable text. Further, the voice framework [110] receives and transmits the computer readable text to the speech driven application without specifying the specific ones of the speech driven application-independent and speech application platform-independent parameters. The voice framework [110] then converts the computer readable text.

## Description

The present invention relates generally to speech enabled computing, and more particularly relates to a voice framework for the speech enabled computing, and especially to a framework to enable multimodal access to applications.

In today's increasingly competitive business environment, companies must find more efficient and effective ways to stay in touch with consumers, employees, and business partners. To stay competitive, companies must offer easy anywhere access to enterprise resources, transactional data and other information. To provide such services, a voice solution that integrates with current infrastructure, that remains flexible and scalable, and that uses open industry software standards is required.

Current voice frameworks for the voice solutions (to interact with people) use speech driven applications which rely on an audio input device (microphone) and an audio output device (speaker) embedded in audio enabled devices, such as telephones, PDAs (personal digital assistants), laptops, and desktops. The audio input data (spoken word data) received from the audio input device can be provided via audio circuitry to a speech recognition engine for conversion to computer recognizable text. The converted computer recognizable text is then generally sent to various speech driven business applications, such as telecom applications, customized applications, portals, web applications, CRM applications (customer relationship management applications), knowledge management systems, and various databases. Each audio enabled device including the audio input and audio output devices can require their own unique speech recognition engine to provide the audio input and audio output data via the audio circuitry to the speech driven applications due to audio enabled device dependent parameters.

Similarly, the current voice applications send computer recognizable text originating in a speech driven application to a text-to-speech (TTS) engine for conversion to the audio output data to be provided via the audio circuitry to the audio output device. To accommodate for such transfers of the computer recognizable text between the speech driven applications and the audio enabled devices, the TTS engine may have to be specific due to application dependent parameters, such as media transport protocols and media transport specific parameters, for example, frame size and packet delay.

Further, the speech recognition and TTS engines may have to be compliant with evolving speech application platforms, such as SAPI (speech application programming interface), Voice XML (Voice extensible markup language), and other such custom solutions. Hence, the speech recognition and the TTS engines may have to be specific due to speech application platform dependent parameters.

Due to the above-described device, application, and platform dependent parameters, the current voice frameworks including the speech recognition engines and the TTS engines can require extensive real-time modifications to adapt to the dynamic changes in the audio enabled devices, the speech application platforms, and the speech driven applications. Such real-time modifications to the voice frameworks can be very expensive and time consuming. In addition, due to the above-described dependent parameters, the current voice frameworks can be inflexible and generally not scalable. Further due to the above-described dependent parameters, the current voice frameworks remain audio enabled device, speech driven application, speech engine, and speech application platform dependent. Furthermore, the current solutions are computationally intensive and can require special hardware infrastructure, which can be very expensive.

Therefore, there is a need for a cost effective voice framework that can provide voice solutions in a manner that does not duplicate, but leverages existing web and data resources, and that integrates with current infrastructure, that remains flexible and scalable, that is platform independent, that can easily deploy across vertical applications, such as, sales, insurance, banking, retail, and healthcare that use open industry software standards.

The present invention provides a voice framework for linking an audio enabled device with a speech driven application. In one example embodiment, the voice framework of the present subject matter includes an audio enabled device adapter, a speech engine hub, and a speech driven application adapter. In this example embodiment, the audio enabled device adapter receives and transmits digitized speech audio to the speech engine hub without specifying the specific ones of the audio enabled device independent and speech application platform-independent parameters. The speech engine then converts the received digitized audio speech to computer readable text. In some embodiments, the speech engine can be envisioned to convert the received digitized audio speech to computer readable data. The speech driven application adapter then receives and transmits the computer readable text to a speech driven application without specifying the specific ones of the speech driven application-independent and speech application platform-independent parameters.

Further in this example embodiment, the speech driven application adapter receives and transmits the computer readable text from the speech driven application without specifying the specific ones of the speech driven application-independent and speech application platform-independent parameters. The speech engine hub then converts the computer readable text to the digitized audio speech. The audio enabled device adapter then receives and transmits the digitized speech audio to the audio enabled device without specifying the specific ones of the audio enabled device independent and speech application platform-independent parameters.

FIG. 1 is a block diagram illustrating an audio enabled device, a speech driven application, and application platform independent voice framework according to the various embodiments of the present subject matter.

FIG. 2 is a block diagram illustrating implementation of the voice framework shown in FIG. 1 according to the various embodiments of the present subject matter.

FIG. 3 is a flowchart illustrating an example method of linking speech driven applications to one or more audio enabled devices via the voice framework shown in FIGS. 1 and 2.

FIG. 4 is a block diagram of a typical computer system used for linking speech driven applications to one or more audio enable devices using the voice framework shown in FIGS. 1-3 according to an embodiment of the present subject matter.

The present subject matter provides a voice framework to link speech driven applications to one or more audio enabled devices via a speech engine hub. Further, the technique provides an audio device, a speech driven application, and a speech application platform independent voice framework that can be used to build speech-enabled applications, i.e., applications that have the capability of "speaking and hearing" and can interact with humans. In addition, the voice framework provides flexibility so that it can be implemented across verticals or various business applications. In one example embodiment, this is accomplished by using basic components that are generally found in voice applications. The voice framework includes the audio enabled device, the speech driven application, and the speech application platform independent components which provides a cost effective and easier deployment solution for voice applications.

In the following detailed description of the various embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

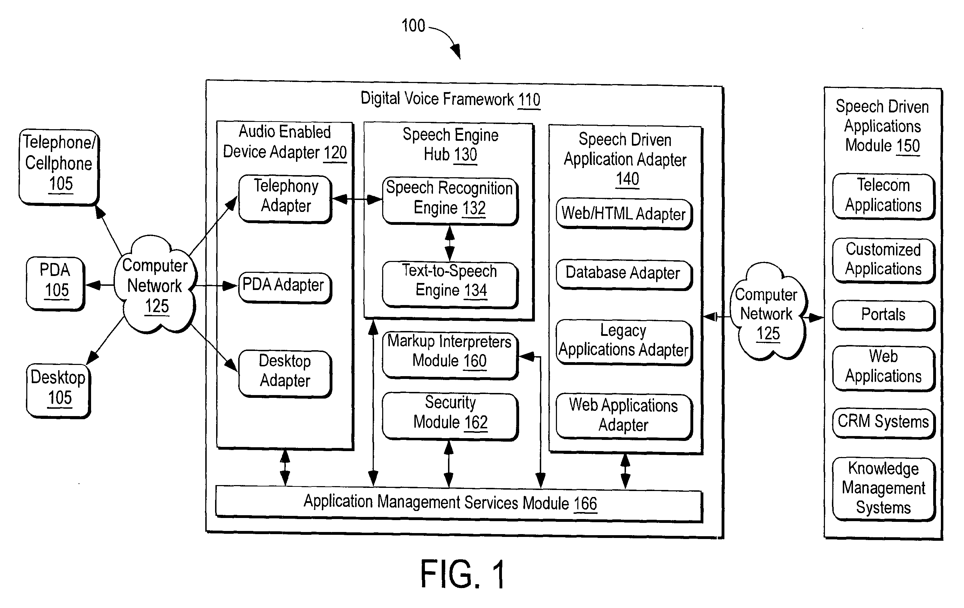

FIG. 1 is a block diagram 100 of a voice framework illustrating the operation of linking an audio enabled device with a speech driven application according to the various embodiments of the present invention. The block diagram 100 shown in FIG. 1 illustrates one or more audio enabled devices 105, a voice framework 110, and a speech driven applications module 150. As shown in FIG. l, the one or more audio enabled devices 105 are communicatively coupled to the voice framework 110 via a computer network 125. Also shown in FIG. 1 is the speech driven applications module 150 that is communicatively coupled to the voice framework 110 via the computer network 125.

Further as shown in FIG. 1, the speech driven applications module 150 includes one or more speech driven applications, such as telecom applications, customized applications, portals, Web applications, CRM systems, and knowledge management systems. In addition as shown in FIG. 1, the voice framework 110 includes an audio enabled device adapter 120, a speech engine hub 130, a markup interpreters moduie 160, a security moduie 162, and a speech driven application adapter 140. Also shown in FIG. 1 is an application management services module 166 communicatively coupled to the audio enabled device adapter 120, the speech engine hub 130, the markup interpreters module 160, the security module 162, and the speech driven application adapter 140. Furthermore as shown in FIG. 1, the speech engine hub 130 includes a speech recognition engine 132 and a text-to-speech (TTS) engine 134.

In operation, the audio enabled device adapter 120 receives digitized speech audio from the one or more audio enabled devices 105 without specifying the specific ones of the audio enabled device-independent and speech application platform-independent parameters. In some embodiments, the audio enabled device adapter 120 receives the digitized speech audio from the one or more audio enabled devices 105 via the network 125. The one or more audio enabled devices 105 can include devices, such as a telephone, a cell phone, a PDA (personal digital assistant), a laptop computer, a smart phone, a tablet personal computer (tablet PC), and a desktop computer. The audio enabled device adapter 120 includes associated adapters, such as a telephony adapter, a PDA adapter, a Web adapter, a laptop computer adapter, a smart phone adapter, a tablet PC adapter, a VoIP adapter, a DTMF (dual-tone-multi-frequency) adapter, an embedded system adapter, and a desktop computer adapter.

The speech engine hub 130 then receives the digitized speech audio from the one or more audio enabled devices 105 via the audio enabled device adapter 120 and converts the digitized audio speech to computer readable text. In some embodiments, the speech recognition engine 132 converts the received digitized audio speech to a computer readable data. The speech engine hub 130 used in the voice framework 110 can be generic and can generally support any vendor's speech engine. In addition, the speech engine hub 130 can have components that perform routine and essential activities needed for the voice framework 110 to interact with other modules in the voice framework 110.

In these embodiments, the speech engine hub 130 performs speech recognition and speech synthesis operations, i.e., the spoken words are converted to computer readable text, while the computer readable text is converted to digitized speech audio depending on the requirements of the voice framework 110. The speech engine hub 130 is designed for easier configuration by a systems administrator. The architecture of the speech engine hub 130 can include capabilities to automatically improve accuracy of speech recognition. This is accomplished by using a grammars module. The speech engine hub 130 along with the markup interpreters module 160 provides the necessary support for markup languages, such as SALT (speech applications language tags) and VoiceXML. In addition, the speech engine hub 130 also has capabilities to translate most languages to provide the capability to use more than one language.

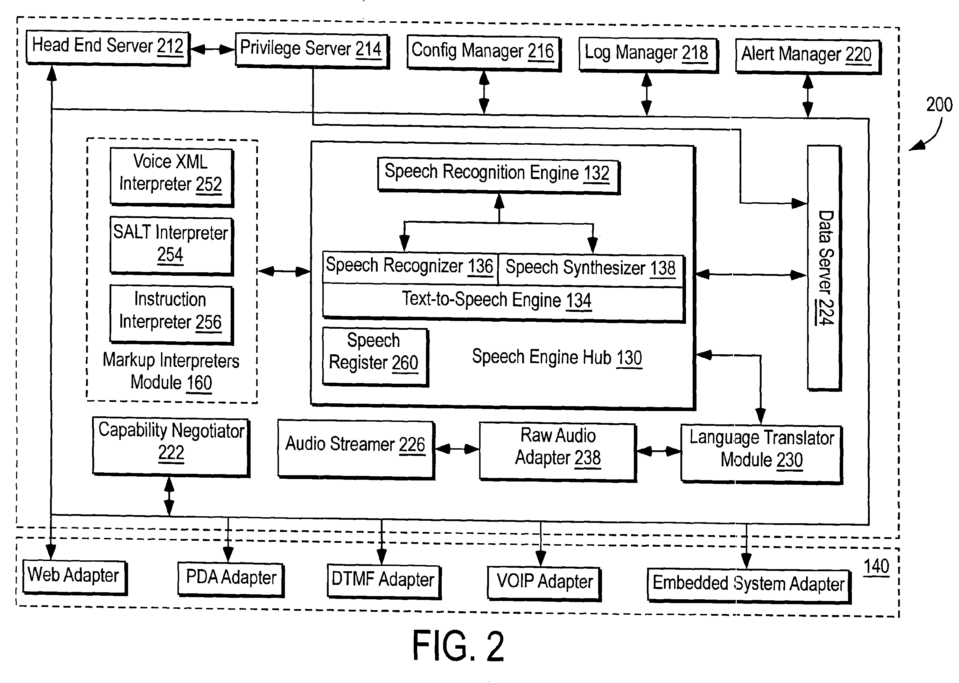

Also in these embodiments, the speech engine hub 130 provides means to improve accuracy of recognition, with the fine-tuning needed to improve the performance of the speech engine hub 130. The speech engine hub 130 can also provide interfaces to load predefined grammars and support for various emerging voice markup languages, such as SALT and Voice XML to aid compliancy with standards. This is accomplished by leveraging an appropriate language adaptor using the language translator module 230 (shown in FIG. 2).

Further in these embodiments, the TTS engine 134 includes a speech recognizer 136, which abstracts the underlying speech recognition engines and provides a uniform interface to the voice framework 110. For example, a caller requesting for a speech recognition task can be oblivious to the underlying speech engine. In such a case the caller can send a voice input to the speech recognizer 136, shown in FIG. 2, and can get back a transcribed text string. Also in these embodiments, the TTS engine 134 includes a speech synthesizer 138, shown in FIG. 2, which abstracts the underlying speech synthesis engines and provides a uniform interface to the voice framework 110. Similarly, a caller requesting for a speech synthesis task can be oblivious to an underlying speech engine. In such a case, the caller can send a text string as input to the synthesizer and get back a speech stream.

The speech driven application adapter 140 then receives the computer readable text from the speech engine hub 130 and transmits the computer readable text to the speech driven applications module 150 via the network 125 without specifying the specific ones of the speech driven application-independent and speech application platform-independent parameters. The speech driven applications module 150 can include can include one or more enterprise applications, such as telephone applications, customized applications, portals, web applications, CRM systems, knowledge management systems, interactive speech enabled voice response systems, multimodal access enabled portals, and so on. The speech driven application adapter 140 can include associated adapters, such as a Web/HTML (Hyper Text Markup Language) adapter, a database adapter, a legacy applications adapter, a web services adapter, and so on.

Referring now to FIG. 2, there is illustrated a block diagram 200 of an example implementation of the voice framework shown in FIG. 1 according to the various embodiments of the present invention. The block diagram 200 shown in FIG. 2 illustrates a head end server 212, a privilege server 214, a configuration manager 216, a log manager 218, an alert manager 220, the speech engine hub 130, the markup interpreters module 160, a data server 224, a capability negotiator 222, an audio streamer 226, a raw audio adapter 228, a language translator module 230, and the speech driven application adapter 140.

As shown in FIG. 2, the markup interpreters module 160 includes a Voice XML interpreter 252, a SALT interpreter 254, and an instruction interpreter 256. Further as shown in FIG. 2, the speech engine hub 130 includes the speech recognition engine 132, the TTS engine 134, and a speech register 260. Also as shown in FIG. 2, the speech driven application adapter 140 includes adapters, such as a Web adapter, a PDA adapter, a DTMF adapter, a VoIP (Voice over Internet Protocol) adapter, and an embedded system adapter.

In operation, the markup interpreters module 160 enables speech driven applications and the audio enabled devices 105 to communicate with the voice framework 110 via industry complaint instruction sets and markup languages using the interpreters, such as the voice XML interpreter 252, the SALT interpreter 254, the instruction interpreter 256, and other such proprietary instruction interpreters that can facilitate in enabling the audio devices to communicate with the voice framework 110.

In some embodiments, the speech register 260 loads a specific speech engine service by activating and configuring the speech engine hub 130 based on specific application requirements. The speech register 260 holds configuration information about the speech recognizer 136 and the speech synthesizer 138 and can be used by the voice framework 110 to decide which speech engine synthesizer and recognizer to load based on the application requirements. For example, a new module including each of these versions can be plugged into the voice framework 110 by updating information in a registry. In these embodiments, the voice framework 110 can support multiple instances of the speech synthesizer and speech recognizer. The speech register 260 can also hold configuration information in multiple ways, such as a flat file or a database. In these embodiments, the head end server 212 launches and manages the speech driven application adapter 140 as shown in FIG. 2.

In some embodiments, the configuration manager 216 maintains configuration information pertaining to the speech driven application adapter 140, i.e., configuration information pertaining to the speech driven application 140 of the voice framework 110. In these embodiments, the configuration manager 216 can be the central repository for all configuration information pertaining to the voice framework 110. The configuration manager 216 includes information as to where each of the modules of the voice framework 110 are and how they are configured. This is generally accomplished by using an admin module in the configuration manager 216 to set up some modules as part of the voice framework 110 and/or to turn off other modules.

In these embodiments, the configuration manager 216 comprises a configuration data presenter to manage translation of data as required by the admin module. The configuration manager 216 can also be used to retrieve and update the configuration information for the voice framework 110. Further in these embodiments, the configuration manager 216 includes a configuration data dispatcher, which manages configuration data stores and retrievals. The configuration data dispatcher abstracts each data store and retrieval activity from the rest of the activities in the voice framework 110. In addition, the configuration data presenter interacts with the configuration data dispatcher to send and get data from different configuration information store activities. Furthermore in these embodiments, the configuration manager 216 includes a configuration data publisher which publishes actual implementation of configuration store activities.

In other embodiments, the log manager 218 keeps track of operations of the voice framework 110. In addition, the log manager 218 keeps track of operational messages and generates reports of the logged operational messages. In these embodiments, the log manager 218 generally provides logging capabilities to the voice framework 110. The log manager 218 can be XML compliant. Also, the log manager 218 can be configured for various logging parameters, such as log message schema, severity, output stream and so on.

In some embodiments, the log manager 218 includes a message object module that is XML compliant, which can be serializable. The message object module includes all the information about a received message, such as the owner of a message, name of the message sender, a message type, a time stamp, and so on. Also in these embodiments, the log manager 218 includes a log message queue module which holds all the received messages in its intermediary form, i.e., between when the message was posted and the message was processed for logging. The message queue module also helps in the asynchronous operation mechanism of the log engine service. In these embodiments, the queue can be encapsulated by a class, which can expose interface to access the queue. Also in these embodiments, the log manger 218 can be set up such that only the log manager 218 has access to the log message queue. The queue class can be set up such that the log manager 218 is notified when there is a new posting for a received message. Further, in these embodiments, the log manager 218 includes a log processor which can be instantiated by the log manager 218. The role of the log process in these embodiments is to process the log messages and dispatch them to a log writer. In these embodiments, the log processor can consult policy specific information set in a configuration file and apply any specified rules to the log messages.

In some embodiments, the voice framework 110 includes the privilege server 214, which during the operation of the voice framework 110 authenticates, authorizes and grants privileges to a client to access the voice framework 110. In these embodiments, the data server 224 facilitates in interfacing data storage systems and data retrieval systems with the speech engine hub 130.

In some embodiments, the alert manager 220 posts alerts within the voice framework modules and between multiple deployments of the voice framework 110. For example, if a module shuts down or encounters an error, an alert can be posted to the alert manager 220. The alert manager 220 can then apply policies on the received alert message and forward the alert to the modules that are affected by the shut down and/or the encountered error. The alert manager 220 can also handle acknowledgements and can retry when a module is unavailable. This can be especially helpful when the modules are distributed across machines, where the network conditions may require sending the message again.

In these embodiments, the alert manager 220 includes an alert queue module. The alert queue module holds the messages to be posted to the different components in the voice framework 110. The alert manager 220 places incoming messages in the queue. Also in these embodiments, the alert manager 220 along with an alert processor polls an alert queue for new messages received and fetch the messages. The alert processor can interact with a policy engine to extract rules to apply to a received message, such as retry counts, message clients, expiry time, acknowledgement requirements, and so on. In these embodiments, the alert processor fetches messages from the queue. The messages can remain in the queue until an acknowledgment is received from a recipient module.

Further in these embodiments, the alert manager 220 includes an alert dispatcher, which is a worker module of the voice framework 110 that can handle actual message dispatching to various message clients. The alert dispatcher receives a message envelope from the alert processor and reads specified rules, such as retires, message client type, and so on. The alert dispatcher then queries a notifier register to get an appropriate notifier object that can translate a message according to a format an intended recipient can understand. The alert dispatcher then posts the message to a notifier. If for any reason a message does not go through the voice framework 110, then the alert dispatcher takes care of the retry operations to resend the message.

Also in these embodiments, the alert manager includes a policy engine that abstracts all storage and retrieval of policy information relative to various messages. In these embodiments, the policy engine maintains policy information based on priority based message filtering, retry counts, expiry times, and so on. The policy manger can also maintain policy information during various store operations performed on a database and/or a flat file.

The alert manger 220 can also include a report manager, which extracts message acknowledgements form the acknowledgment queue. The report manger then queries the policy engine for information on how to handle each acknowledgement. An action by the report manager can be to remove the original message from the alert queue once an acknowledgment is received.

The alert manager 220 can also include an acknowledgement queue module that receives the acknowledgement messages from various notifiers in the voice framework 110. The report manager then reads the queue to perform acknowledgement specific actions. The alert manager 220 can also include a notifier register which can contain information about various notifiers supported by the voice framework 110. The information in the notifier register can be queried later by the alert dispatcher to determine the type of notifier to instantiate delivery of a specific message. The alert manager 220 can further include a notifier that abstracts the different message recipients using a standard interface. The alert dispatcher can be oblivious to the underlying complexity of a message recipient and the methodology to send messages to the notifier. The notifier can also send an acknowledgement to the acknowledgement queue module once a message has been successfully delivered.

In some embodiments, the voice framework 110 includes the capability negotiator 222 for negotiating capabilities of an audio enabled device coupled to the voice framework 1 10 via the network 125. The voice framework 110 can also include the audio streamer 226 for providing a continuous stream of audio data to the audio enabled device. Also in these embodiments, the voice framework 110 includes the raw audio adapter 228 for storing audio data in a neutral format and for converting the audio data to a required audio format. Further, the voice framework 110 can include the language translator 230, which works with the speech engine hub 130, to convert a text received in one language to another language. For example, the language translator 230 converts the text received in English to Chinese or Hindi and so on. The language translator 230 can perform translation of converting text received in language other English if the speech engine hub 130 supports languages other English.

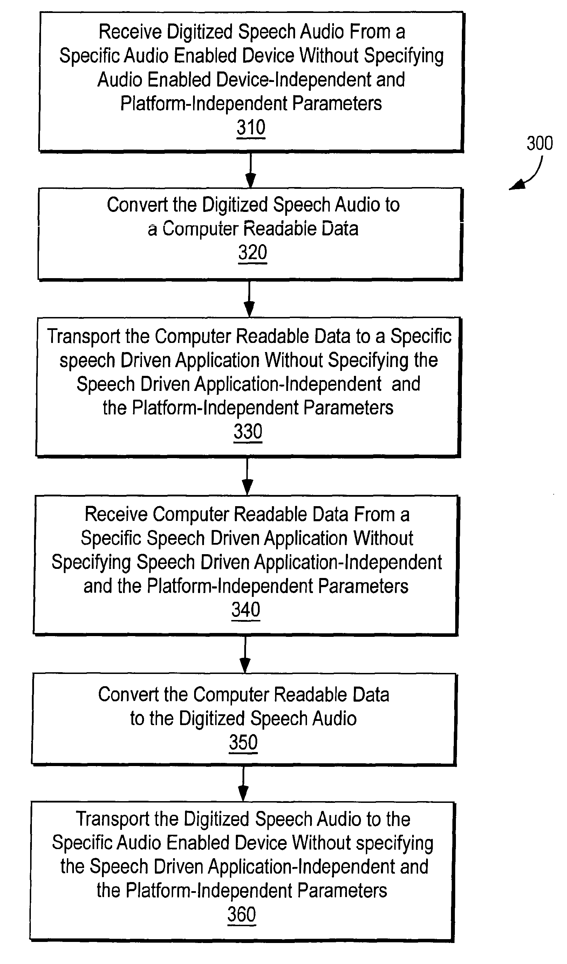

Referring now to FIG. 3, there is illustrated an example method 300 of linking speech driven applications to one or more audio enabled devices via the voice framework 110 shown in FIGS. 1 and 2. At 310, this example method 300 receives digitized audio speech from a specific audio enabled device without specifying the specific ones of the audio enabled device-independent parameters and platform-independent parameters. In some embodiments, an input buffer is configured to receive and store the digitized speech audio from the specific audio enabled device.

At 320, the received digitized audio speech is converted to computer readable text. In some embodiments, the digitized audio speech is converted to the computer readable text using a speech engine hub.

At 330, the converted computer readable text is transported to a specific speech driven application without specifying the specific ones of the speech driven application-independent parameters and the platform-independent parameters necessary to transport the computer readable text. In some embodiments, an output buffer is configured to store and transmit the digitized speech audio to the specific audio enabled device.

At 340, the computer readable text can be received from a specific speech driven application without specifying the specific ones of the speech driven applicationindependent parameters and the platform-independent parameters. At 350, the received computer readable text from the specific speech driven application is converted to the digitized speech audio. In some embodiments, the computer readable text is converted to the digitized speech audio using the speech engine hub.

At 360, the digitized speech audio is transported to the specific audio enabled device without specifying the specific ones of the speech driven application-independent parameters and the platform-independent parameters necessary to transport the computer readable text. The operation of linking the speech driven applications to one or more audio enabled devices via the voice framework is described in more detail with reference to FIGS. 1 and 2.

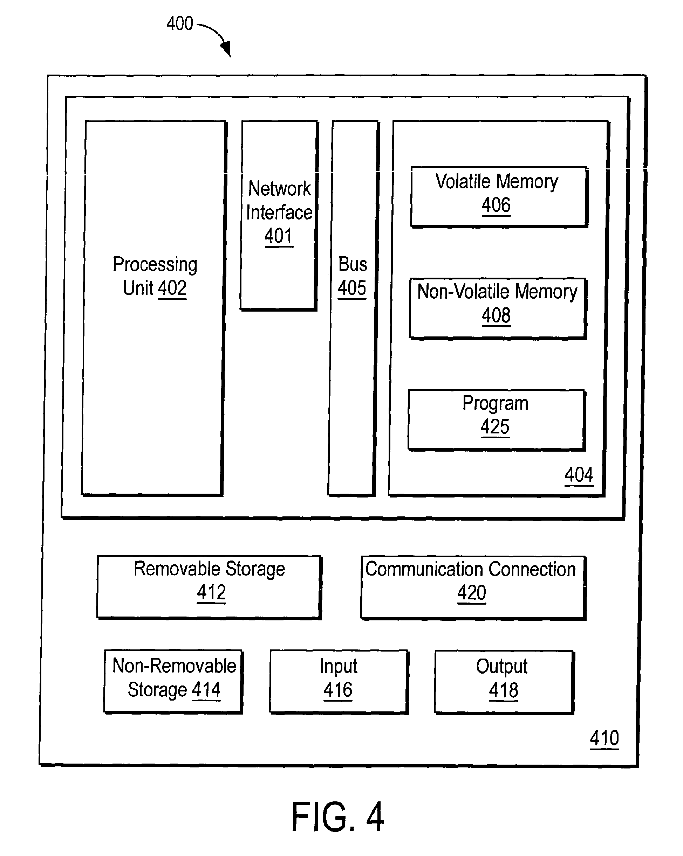

Various embodiments of the present invention can be implemented in software, which may be run in the environment shown in FIG. 4 (to be described below) or in any other suitable computing environment. The embodiments of the present invention are operable in a number of general-purpose or special-purpose computing environments. Some computing environments include personal computers, general-purpose computers, server computers, hand-held devices (including, but not limited to, telephones and personal digital assistants (PDAs) of all types), laptop devices, multi-processors, microprocessors, set-top boxes, programmable consumer electronics, network computers, minicomputers, mainframe computers, distributed computing environments and the like to execute code stored on a computer-readable medium. The embodiments of the present invention may be implemented in part or in whole as machine-executable instructions, such as program modules that are executed by a computer. Generally, program modules include routines, programs, objects, components, data structures, and the like to perform particular tasks or to implement particular abstract data types. In a distributed computing environment, program modules may be located in local or remote storage devices.

FIG. 4 shows an example of a suitable computing system environment for implementing embodiments of the present invention. FIG. 4 and the following discussion are intended to provide a brief, general description of a suitable computing environment in which certain embodiments of the inventive concepts contained herein may be implemented.

A general computing device, in the form of a computer 410, may include a processing unit 402, memory 404, removable storage 412, and non-removable storage 414. Computer 410 additionally includes a bus 405 and a network interface (NI) 401.

Computer 410 may include or have access to a computing environment that includes one or more input elements 416, one or more output elements 418, and one or more communication connections 420 such as a network interface card or a USB connection. The computer 410 may operate in a networked environment using the communication connection 420 to connect to one or more remote computers. A remote computer may include a personal computer, server, router, network PC, a peer device or other network node, and/or the like. The communication connection may include a Local Area Network (LAN), a Wide Area Network (WAN), and/or other networks.

The memory 404 may include volatile memory 406 and non-volatile memory 408. A variety of computer-readable media may be stored in and accessed from the memory elements of computer 410, such as volatile memory 406 and non-volatile memory 408, removable storage 412 and non-removable storage 414. Computer memory elements can include any suitable memory device(s) for storing data and machine-readable instructions, such as read only memory (ROM), random access memory (RAM), erasable programmable read only memory (EPROM), electrically erasable programmable read only memory (EEPROM), hard drive, removable media drive for handling compact disks (CDs), digital video disks (DVDs), diskettes, magnetic tape cartridges, memory cards, Memory Sticks™, and the like; chemical storage; biological storage; and other types of data storage.

"Processor" or "processing unit," as used herein, means any type of computational circuit, such as, but not limited to, a microprocessor, a microcontroller, a complex instruction set computing (CISC) microprocessor, a reduced instruction set computing (RISC) microprocessor, a very long instruction word (VLIW) microprocessor, explicitly parallel instruction compuling (EPIC) microprocessor, a graphics processor, a digital Signal processor, or any other type of processor or processing circuit. The term also includes embedded controllers, such as generic or programmable logic devices or arrays, application specific integrated circuits, single-chip computers, smart cards, and the like.

Embodiments of the present invention may be implemented in conjunction with program modules, including functions, procedures, data structures, application programs, etc., for performing tasks, or defining abstract data types or low-level hardware contexts.

Machine-readable instructions stored on any of the above-mentioned storage media are executable by the processing unit 402 of the computer 410. For example, a computer program 425 may comprise machine-readable instructions capable of linking an audio enabled device with a speech driven application according to the teachings and herein described embodiments of the present invention. In one embodiment, the computer program 425 may be included on a CD-ROM and loaded from the CD-ROM to a hard drive in nonvolatile memory 408. The machine-readable instructions cause the computer 410 to communicatively link an audio enabled device with a speech driven application using the voice framework according to the embodiments of the present invention.

The voice framework of the present invention is modular and flexible in terms of usage in the form of a "Distributed Configurable Architecture". As a result, parts of the voice framework may be placed at different points of a network, depending on the model chosen. For example, the speech engine hub can be deployed in a server, with both speech recognition and speech synthesis being performed on the same server and the input and output streamed over from a client to the server and back, respectively. A hub can also be placed on each client, with the database management centralized. Such flexibility allows faster deployment to provide a cost effective solution to changing business needs.

The above description is intended to be illustrative, and not restrictive. Many other embodiments will be apparent to those skilled in the art. The scope of the invention should therefore be determined by the appended claims, along with the full scope of equivalents to which such claims are entitled.

### Conclusion

The above-described methods and apparatus provide various embodiments for linking speech driven applications to one or more audio enabled devices via a voice framework.

It is to be understood that the above-description is intended to be illustrative, and not restrictive. Many other embodiments will be apparent to those of skill in the art upon reviewing the above-description. The scope of the subject matter should, therefore, be determined with reference to the following claims, along with the full scope of equivalents to which such claims are entitled.

As shown herein, the present invention can be implemented in a number of different embodiments, including various methods, a circuit, an I/O device, a system, and an article comprising a machine-accessible medium having associated instructions.

Other embodiments will be readily apparent to those of ordinary skill in the art. The elements, algorithms, and sequence of operations can all be varied to suit particular requirements. The operations described-above with respect to the method illustrated in FIG. 3 can be performed in a different order from those shown and described herein.

FIGS. 1, 2, 3, and 4 are merely representational and are not drawn to scale. Certain proportions thereof may be exaggerated, while others may be minimized. FIGS. 1-4 illustrate various embodiments of the invention that can be understood and appropriately carried out by those of ordinary skill in the art.

In the foregoing detailed description of the embodiments of the invention, various features are grouped together in a single embodiment for the purpose of streamlining the disclosure. This method of disclosure is not to be interpreted as reflecting an intention that the claimed embodiments of the invention require more features than are expressly recited in each claim. Rather, as the following claims reflect, inventive subject matter lies in less than all features of a single disclosed embodiment. Thus the following claims are hereby incorporated into the detailed description of the embodiments of the invention, with each claim standing on its own as a separate preferred embodiment.

## Claims

1. A voice framework [110] to link an audio enabled device [105] with a speech driven application [150] without specifying the specific ones of the audio enabled device-independent and speech application platform-independent parameters, and further without specifying the specific ones of the speech driven application-independent and speech application platform-independent parameters.

2. The voice framework [110] of claim 1, wherein the voice framework [110] to link the audio enabled device [105] with the speech driven application [150] without specifying the specific ones of the audio enabled device-independent and speech application-independent parameters comprises:
an audio enabled device adapter [120] for receiving and transmitting a digitized speech audio without specifying the specific ones of the audio enabled device independent and speech application platform-independent parameters.

3. The voice framework [110] of claim 2, wherein the voice framework [110] to link the audio enabled device [105] with the speech driven application without specifying the specific ones of the speech driven application and speech application-independent parameters comprises:
a speech driven application adapter [140] for receiving and transmitting a computer readable text from the speech driven application [150] without specifying the specific ones of the speech driven application-independent and platform-independent parameters.

4. The voice framework [110] of claim 3, comprises:
a speech engine hub [130] for converting the received digitized speech audio to the computer readable text and for converting the received computer readable text to the digitized speech audio, wherein the speech engine hub [130] is speech engine independent.

5. The voice framework [110] of claim 4, wherein the speech engine hub [130] comprises:
a speech recognition engine [132] to convert the received digitized speech audio to computer readable text; and
a text-to-speech (TTS) engine [134] to convert computer readable text to the digitized speech audio.

6. A system comprising:
a speech engine hub [130];
an audio enabled device adapter [120] for providing an audio enabled device independent interface between a specific audio enabled device [105] and the speech engine hub [130], wherein the audio enabled device adapter [120] to receive digitized speech audio from the specific audio enabled device [105] without specifying the specific ones of the audio enabled device-independent and software platform-independent parameters, wherein the speech engine hub [130] is communicatively coupled to the audio enabled device adapter [120] to convert the digitized audio speech to computer readable text; and
a speech driven application adapter [140] communicatively coupled to the speech engine hub [130] for providing a speech driven application independent interface between a speech driven application [150] and the speech engine hub 130], wherein the speech engine hub [130] to transmit the computer readable text to the speech driven application adapter [140], wherein the speech driven application adapter [140] to transmit the digitized audio speech to a specific speech driven application [150] without specifying the specific ones of the speech driven application-independent and software platform independent parameters.

7. The system of claim 6, wherein the speech driven application adapter [140] to receive the computer readable text from a specific speech driven application [150] without specifying the specific ones of the speech driven application-independent and software platform independent parameters, wherein the speech engine hub [130] to convert the computer readable text received from the speech driven application adapter [140] to the digitized speech audio.

8. The system of claim 7, wherein the speech engine hub [130] to transmit the digitized speech audio to the audio enabled device adapter [120], wherein in the audio enabled device adapter [120] to transmit the digitized speech audio to a specific audio enabled device [105] without specifying the specific ones of the audio enabled device independent and software platform-independent parameters.

9. The system of claim 6, wherein the speech engine hub [130] comprises:
a speech recognition engine [132], wherein the speech recognition engine [132] converts the digitized speech audio to computer readable text; and
a TTS engine [134], wherein the TTS engine [134] converts the computer readable text to the digitized speech audio.

10. The system of claim 9, wherein the speech engine hub [130] further comprising:
a speech register [260] for loading a specific speech engine service by activating and configuring the speech engine hub [130] based on application needs.
